# EUROPEAN PATENT APPLICATION

(11) **EP 2 383 632 A1**
(43) Date of publication of application: **02.11.2011**
(21) Application number: 10161127.5
(22) Date of filing: 27.04.2010
(51) Int. Cl.: G06F 3/033

(54) **Mouse with a battery structure**

(71) Applicant: Giga-Byte Technology Co., Ltd., Taipei 231 (TW)
(72) Inventor: Shih, Po-Jen, Hsin Tien, Taipei County 231 (TW); Chen, Shu-I, Hsin Tian, Taipei County 231 (TW); Chen, Ming-Yuan, Hsin Tien, Taipei County 231 (TW)
(74) Representative: Schwerbrock, Florian

(57) **Abstract**

A mouse is provided. The mouse includes a first housing, a second housing and a battery module. The second housing is connected with the first housing in a detachable manner. The battery module is fixed on the second housing. The first housing includes a first engage member and the battery module includes a second engage member. The second engage member corresponds to the first engage member and engages with the second engage member. When the second housing is connected with the first housing, the engagement between the first engage member and the second engage member enables the battery module to engage with the first housing.

## Description

### BACKGROUND OF THE INVENTION

### Field of the Invention

The invention relates to a mouse, and in particular, to a mouse comprising a battery structure which is simple to replace.

### Description of the Related Art

In a conventional mouse, the battery is assembled in a battery recess of the mouse, and a battery cover covers the battery to secure the battery. The battery cover engages with a housing of the mouse to prevent separation of the battery from the battery recess. When replacing the battery, one must separate the battery cover first to remove the battery. In addition, after the battery is replaced, the battery cover is reengaged with the housing. This method of changing batteries requires enough time, such that one must stop their activities to replace the battery of the mouse. Thus working efficiency is reduced.

### BRIEF SUMMARY OF THE INVENTION

Accordingly, a mouse is provided. The mouse includes a first housing, a second housing and a battery module. The second housing is connected with the first housing in a detachable manner. The battery module is fixed on the second housing. When the second housing is connected with the first housing, the battery module engages with the first housing.

Preferably, the first housing includes a first engage member and the battery module includes a second engage member. The second engage member corresponds to the first engage member and engages with the second engage member. The engagement between the first engage member and the second engage member enables the battery module to engage with the first housing.

Preferably, the first engage member comprises a hook, and the second engage member comprises a notch.

Preferably, the first housing further comprises a first elastic member, and the first elastic member abuts the first engage member

Preferably, the first housing further comprises a recess, the first engage member is movably disposed in the recess, and the first elastic member, disposed in the recess, abuts the first engage member and the recess.

Preferably, the first housing comprises a slide groove, the battery module comprises a slide member, and the slide member slides in the slide groove.

Preferably, the first housing comprises a stop portion and a second elastic member, the second elastic member is disposed on the stop portion, and when the battery module engages with the first housing, the battery module abuts the second elastic member.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:

Fig. 1 is a schematic view of a mouse of the invention;

Fig. 2 is an exploded view of the mouse of the invention;

Fig. 3 is a schematic view showing the interior structure of the mouse of the invention;

Fig. 4 is a bottom view of the mouse of the invention; and

Fig. 5 is a sectional view of the mouse of the invention.

### DETAILED DESCRIPTION OF THE INVENTION

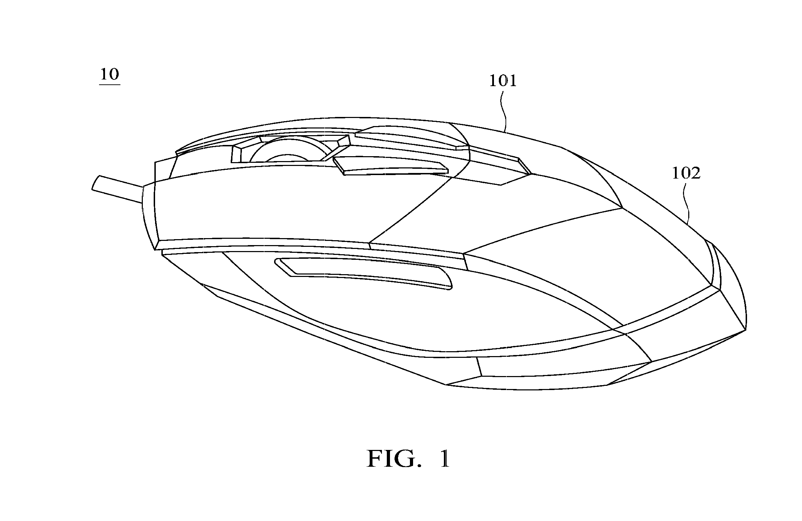

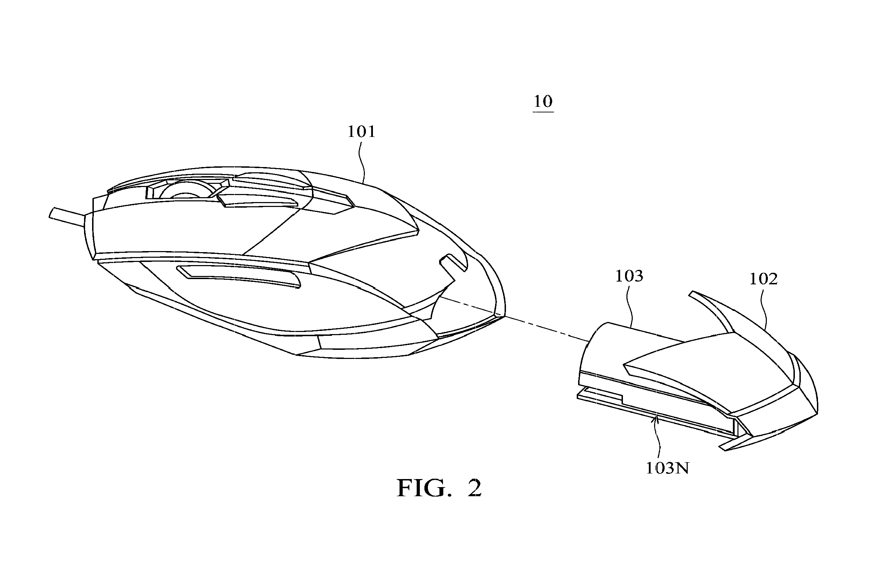

Fig. 1 is a schematic view of a mouse of the invention, and Fig. 2 is an exploded view of the mouse of the invention. Referring to Figs. 1 and 2, the invention provides a mouse 10 comprising a first housing 101, a second housing 102 and a battery module 103. The second housing 102 is connected with the first housing 101 in a detachable manner, and the battery module 103 is fixed on the second housing 102. When the second housing 102 is detached from the first housing 101, the battery module 103 is directly removed from the first housing 101. Contrarily, when the second housing 102 is attached with the first housing 101, the battery module 103 is simultaneously assembled in the first housing 101.

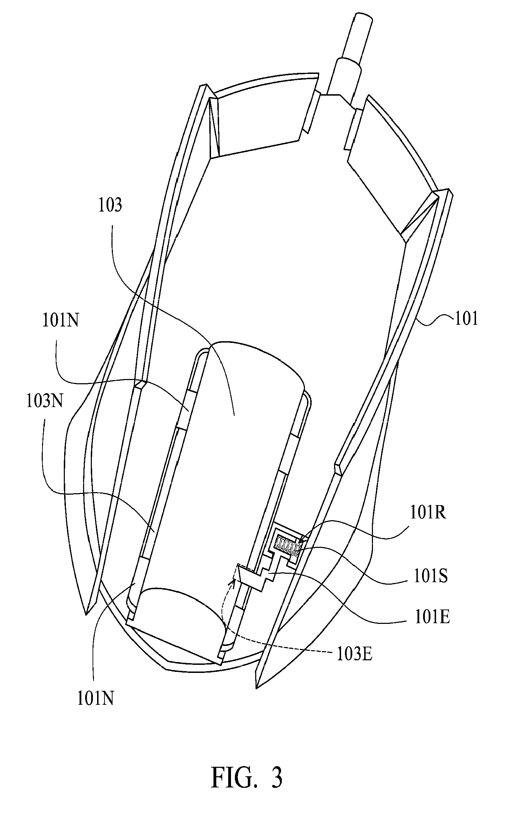

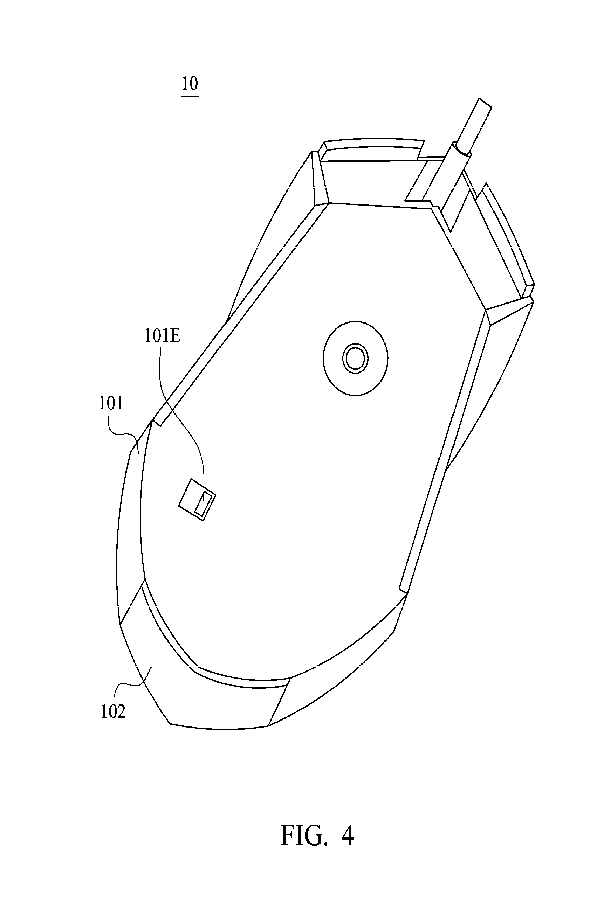

Fig. 3 is a schematic view showing the interior structure of the mouse of the invention, and Fig. 4 is a bottom view of the mouse of the invention. Referring to Figs. 3 and 4, the first housing 101 comprises a recess 101R, a first engage member 101E and a first elastic member 101S. The first engage member 101E is a hook movably disposed in the recess 101R. Additionally, a portion of the first engage member 1O1E is exposed outside of the bottom of the first housing 101 (as shown in Fig. 4) for the user to operate the first engage member 1O1E from the exterior of the mouse 10. The first elastic member 1O1S is disposed in the recess 1O1R and abuts the first engage member 101E and the recess 101R to provide a return force which enables the first engage member 101E to return to its original position after it has been moved.

Referring to Fig. 3, the battery module 103 comprises a second engage member 103E. The second engage member 103E is a notch corresponding to the first engage member 101E. Referring to Figs. 2 and 3 again, the battery module 103 comprises a slide member 103N, and the first housing 101 comprises a slide groove. When assembling the battery module 103, the battery module 103 is inserted into the first housing 101 by sliding the slide member 103N in the slide groove 101N. Once the battery module 103 completely fits into the first housing 101, the second engage member 103E of the battery module 103 engages with the first engage member 101E of the first housing 101. In the meantime, the second housing 102 is connected with the first housing 101.

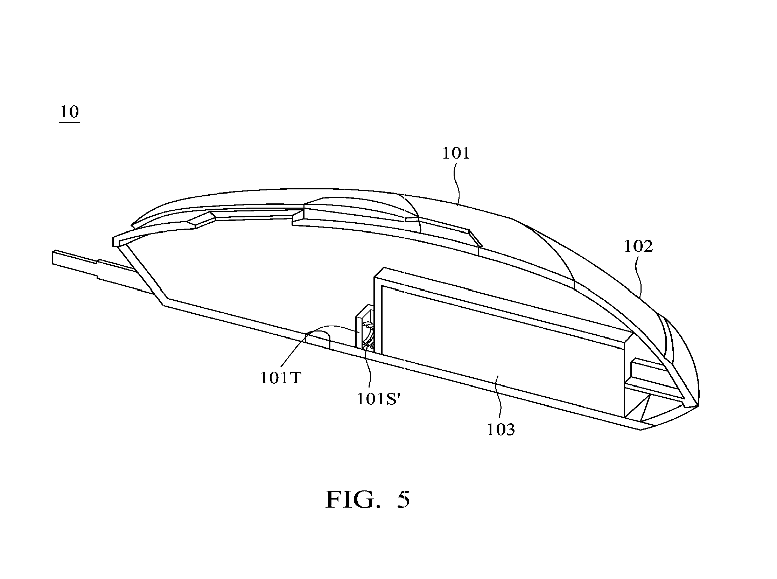

Fig. 5 is a sectional view of the mouse of the invention. Referring to Fig. 5, the first housing 101 further comprises a stop portion 101 T and a second elastic member 101S' . The second elastic member 101S' is disposed on the stop portion 101T. When the battery module 103 engages with the first housing 101 and the first engage member 101E engages with the second engage member 103E, the battery module 103 pushes the second elastic member 101S' which enables the second elastic member 101S' to be compressed between the stop portion 101T and the battery module 103 (as shown in Fig. 5). Meanwhile, an elastic force is accumulated in the second elastic member 101S'. When the user moves the first engage member 101E from the exterior of the first housing 101, the first engage member 101E is separated from the second engage member 103E, and the battery module 103 is freed from the restriction of the first engage member 101E. Afterwards, the battery module 103 is ejected from the first housing 101 by the elastic force accumulated in the second elastic member 101S', and the second housing 102 is separated from the first housing 101 in the mean time. Furthermore, when the first engage member 101E is moved, the first engage member 101E compresses the first elastic member 101S. After the first engage member 101E is released, the first elastic member 101S provides a return force to return the first engage member 101E to its original position.

In other words, the user only needs to move the first engage member 101E from the exterior of the first housing 101, to have the second elastic member 101S' push out the battery module 103. In an opposing fashion, when assembling a new battery module 103, the battery module 103 is slid into the first housing 101 until the second engage member 103E engages with the first engage member 101E.

The mouse 10 of the invention utilizes the movement of the first engage member 101E to eject the battery module 103 out of the first housing 101. In comparison with the convention mouse, wherein the battery cover has to be removed to replace a battery, the mouse 10 of the invention saves time for changing batteries to improve working efficiency.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A mouse, comprising:
a first housing;
a second housing connected with the first housing in a detachable manner; and
a battery module fixed on the second housing;
wherein when the second housing is connected with the first housing, the battery module engages with the first housing.

2. The mouse as claimed in claim 1, wherein the first housing comprises a first engage member, the battery module comprises a second engage member corresponding to the first engage member, and the first engage member engages with the second engage member, and the engagement between the first engage member and the second engage member enables the battery module to engage with the first housing.

3. The mouse as claimed in claim 2, wherein the first engage member comprises a hook, and the second engage member comprises a notch.

4. The mouse as claimed in claim 2, wherein the first housing further comprises a first elastic member, and the first elastic member abuts the first engage member.

5. The mouse as claimed in claim 2, wherein the first housing further comprises a recess, the first engage member is movably disposed in the recess, and the first elastic member, disposed in the recess, abuts the first engage member and the recess.

6. The mouse as claimed in claim 1, wherein the first housing comprises a slide groove, the battery module comprises a slide member, and the slide member slides in the slide groove.

7. The mouse as claimed in claim 1, wherein the first housing comprises a stop portion and a second elastic member, the second elastic member is disposed on the stop portion, and when the battery module engages with the first housing, the battery module abuts the second elastic member.
